# EUROPÄISCHE PATENTSCHRIFT

(11) **EP 1 004 473 B1**
(45) Veröffentlichungstag und Bekanntmachung des Hinweises auf die Patenterteilung: **12.05.2004**
(21) Anmeldenummer: 99121836.3
(22) Anmeldetag: 04.11.1999
(51) Int. Cl.: B60Q 1/00

(54) **Lichteinheit für Fahrzeuge**
Lighting unit for vehicle
Unité d'éclairage pour véhicule

(30) Priorität: 23.11.1998 DE 19853872
(43) Veröffentlichungstag der Anmeldung: 31.05.2000
(73) Patentinhaber: Hella KG Hueck & Co., 59552 Lippstadt (DE)
(72) Erfinder: Hendrischk, Wolfgang, 59494 Soest (DE); Kürpick, Rainer, 33106 Paderborn (DE); Mazziotti, Pietro Antonio, 59556 Lippstadt (DE); Wüstefeld, Michael, 59555 Lippstadt (DE)

(56) Entgegenhaltungen:
- DE-C- 4 414 898
- FR-A- 2 709 810
- US-A- 5 140 504

## Beschreibung

Die Erfindung betrifft eine Lichteinheit für Fahrzeuge, insbesondere Scheinwerfer für Kraftfahrzeuge, mit einem Gehäuse mit einer die gesamte Vorderseite des Gehäuses abdeckenden schalenförmigen Abschlussscheibe, welche zumindest optikfreie Bereiche aufweist, mit mindestens zwei in dem Gehäuse angeordneten schalenförmigen Reflektoren, welche über ein erstes Abdeckteil einstückig miteinander verbunden sind, und mit einem zweiten Abdeckteil, welches zwischen den Reflektoren und der Abschlussseheibe und in der Anbaulage der Lichteinheit zumindest die Reflektoren unterhalb und mit zwei seitlichen Schenkeln umgibt und welches zusammen mit dem ersten Abdeckteil die Sicht in das Innere der Lichteinheit abschirmt.

Eine solche Lichteinheit für Fahrzeuge ist aus der FR - A - 2 709 810 bekannt. Der Scheinwerfer weist eine Gehäuse auf, dessen vordere Öffnung durch eine Abschlussscheibe abgedeckt ist, die etwa rechtwinklig zur Fahrzeuglängsseite verläuft. Zwei in dem Gehäuse angeordnete schalenförmige Reflektoren sind durch eine Verbindung ihrer vorderen Ränder ein einstückiges Teil. Ausschließlich im oberen Randbereich sind die Ränder über ein erstes Abdeckteil einstückig miteinander verbunden. Im unteren Bereich weisen beide Reflektoren eine Abflachung auf, die mit ihrem vorderen Rand die Lichtaustrittsöffnung der Reflektoren begrenzt. Zwischen den Reflektoren und einer Abschlussscheibe des Gehäuses ist ein separates zweites Abdeckteil angeordnet, das an den beiden Reflektoren befestigt ist. Das zweite Abdeckteil erstreckt sich unterhalb, der beiden Reflektoren und weist zwei seitliche nach oben weisende kurze Schenkel auf. In seiner gesamten Länge weist das zweite Abdeckteil ausgehend von den Reflektoren mit seinem freien Rand zur Abschlussscheibe hin. Weiterhin ragt das zweite Abdeckteil in die schalenförmigen Reflektoren hinein und deckt ihre Abflachung ab, damit zwischen dem zweiten Abdeckteil und den Reflektoren kein störender Spalt zu sehen ist. Die Montage des separaten zweiten Abdeckteils ist umständlich und zeitaufwendig und bei der Befestigung des Abdeckteils an den Reflektoren kann die empfindliche Reflexionsfläche der Reflektoren beschädigt werden.

Aus der EP - A1 - 0 646 495 A1 ist eine Lichteinheit für Fahrzeuge bekannt geworden, bei der in einem aus Kunststoff bestehenden Gehäuse zwei schalenförmige Reflektoren seitlich nebeneinander angeordnet sind. Die Reflektoren sind durch Einstelleinrichtungen um eine horizontale und vertikale Achse verstellbar. Zwischen den Reflektoren und einer die Vorderseite des Gehäuses abdeckenden Abschlussscheibe ist ein Abdeckteil angeordnet, welches einen Spalt zwischen den Reflektoren und dem vorderen Rand des Gehäuses abdeckt. Nachteilig hierbei ist, dass das Abdeckteil ein separates Teil ist und mittels Befestigungsschrauben mit der Abschlussscheibe zu verbinden ist. Bei einer anderen bekannten Lichteinheit für Fahrzeuge ist ein separates Abdeckteil an der Abschlussscheibe befestigt, während ein anderes Abdeckteil zwei seitlich nebeneinander angeordnete Reflektoren einstückig miteinander verbindet (DE 44 14 898 C1). Hierbei bestehen zwar für beide Reflektoren gemeinsame Einstelleinrichtungen, jedoch ist weiterhin das separate Abdeckteil kostenintensiv in der Herstellung und umständlich und zeitaufwendig zu montieren.

Bei der Lichteinheit für Fahrzeuge, die aus der EP - A1 - 0 646 495 A1 bekannt ist, liegt eine Positionslichtlampe außerhalb der Lichteinheit und ist ein gesondert an dem Fahrzeug zu befestigendes Teil. Bei anderen bekannten Lichteinheiten ist die Positionslichtlampe in einen Reflektor der Lichteinheit integriert und verkleinert dadurch die Reflexionsfläche des Reflektors.

Die aus der US 5,140,504 bekannte Lichteinheit für Fahrzeuge weist ein zwei Reflektoren verbindendes Abdeckteil zur Aufnahme einer Positionslichtlampe auf.

Aufgabe der Erfindung ist es, die im Oberbegriff des Anspruchs 1 beschriebene Lichteinheit für Fahrzeuge derart zu gestalten, dass das zweite Abdeckteil kein zusätzliches Teil ist und trotzdem bei einer Abschlussscheibe, die in einem stumpfen Winkel zur benachbarten Fahrzeuglängsseite verläuft, das Innere des Scheinwerfers weitestgehend abgedeckt ist und des weiteren eine in die Lichteinheit zu integrierende Positionslichtlampe zusammen mit den Reflektoren in das Gehäuse einsetzbar ist und trotzdem keine der Reflexionsflächen der beiden Reflektoren kleiner gestaltet werden muss. Diese Aufgabe wird nach der Erfindung dadurch gelöst, dass
a) das zweite Abdeckteil (6)
   - sich ausgehend von dem ersten Abdeckteil (5) zur Abschlussscheibe (2) hin erstreckt,
   - zusammen mit dem ersten Abdeckteil (5), den Reflektoren (3, 4) und einer Aufnahme des ersten Abdeckteils (5) für eine Positionslichtlampe (7) ein einstückiges Teil ist und
   - im Bereich eines seitlichen Schenkels (9) zur Abschlussscheibe (2) und im Bereich des anderen seitlichen Schenkels (9) zur Rückseite des Gehäuses (1) hin weist und
b) das erste Abdeckteil (5) stufenförmig gestaltet ist, wobei die Trittflächen (11) der Stufen vertikal und quer zur Lichtaustrittsrichtung verlaufen und die Reflektoren (3, 4) und die Positionslichtlampe (7) aufnehmen.

Die Abdeckteile können zusammen mit den Reflektoren mit einer reflektierenden Schicht versehen werden. Das zweite Abdeckteil verläuft zumindest unterhalb der Reflektoren, da für einen Betrachter vor dem Fahrzeug besonders in diesem Bereich ein zwischen den Reflektoren und dem vorderen Rand des Gehäuses bestehender Spalt stören würde. Durch den einen seitlichen Schenkel des zweiten Abdeckteils, der ausgehend von dem ersten Abdeckteil zur schräg verlaufenden Abschlussscheibe hin gerichteten ist, ist ein Spalt abschirmbar, der zwischen dem zur Fahrzeugmitte hin angeordneten inneren Reflektor und dem benachbarten seitlichen vorderen Rand des Gehäuses besteht, während durch den zur Rückseite des Gehäuses hin weisenden anderen seitlichen Schenkel des ersten Abdeckteils weitestgehend der Spalt abschirmbar ist, der zwischen dem der Fahrzeuglängsseite benachbarten äußeren Reflektor und dem vorderen Rand des Gehäuses besteht.

Die Verwindungssteifigkeit der aus Reflektoren und Abdeckteilen bestehenden Einheit ist besonders groß, wenn das zweite Abdeckteil in einem Bereich oberhalb der Reflektoren mit einem Abschnitt zur Rückseite des Gehäuses hinweist. Dadurch ist das zweite Abdeckteil rahmenartig ausgeführt und an die sie umgebende Reflektoren und das erste Abdeckteil angeformt.

Die Reflektoren und die Positionslichtlampe sollten so nahe zur Abschlussscheibe angeordnet sein, dass die die Reflektoren aufnehmenden Trittflächen der Stufen des ersten Abdeckteils mit mindestens einem Drittel ihrer Ausdehnung sich in das Innere einer schalenförmigen Abschlussscheibe hinein erstrecken. Dadurch kann ein zwischen dem Gehäuse bzw. der Abschlussscheibe und dem zweiten Abdeckteil verbleibender Spalt sehr klein gestaltet sein, und trotzdem ist eine ausreichende Verstellung der Reflektoren um eine horizontale und vertikale Achse möglich.

Die Positionslichtlampe muß zwischen den Reflektoren nur sehr wenig Raum einnehmen, wenn die Positionslichtlampe oberhalb oder unterhalb einer horizontalen Mittelebene der Lichteinheit angeordnet ist. Dies ist besonders bei Reflektoren gegeben, die eine kreisrunde Lichtaustrittsöffnung aufweisen. Weiterhin ist es vorteilhaft, wenn ein Reflektor der Positionslichtlampe einstückig mit dem ersten Abdeckteil ausgeführt ist und der Reflektor durch eine Lichtscheibe abgedeckt ist. Die Lichtscheibe kann mit optischen Elementen versehen sein, welche an das Licht der Positionslichtlampe streuen.

Bei einer besonders vorteilhaften Weiterbildung der Erfindung besteht das Gehäuse aus einem Werkstoff mit einer hellen Farbe. Dadurch erscheint für einen Betrachter ein zwischen dem zweiten Abdeckteil und dem vorderen Rand des Gehäuses verbleibender kleiner Spalt hell, ohne daß die Innenseite des Gehäuses mit einer zusätzlich aufzubringenden hellen Oberflächenschicht versehen sein muß. Als helle Farbe für das Gehäuse eignet sich z. B. weiß oder hellgrau. Solche Farben weisen einen hohen Reflexionsgrad auf.

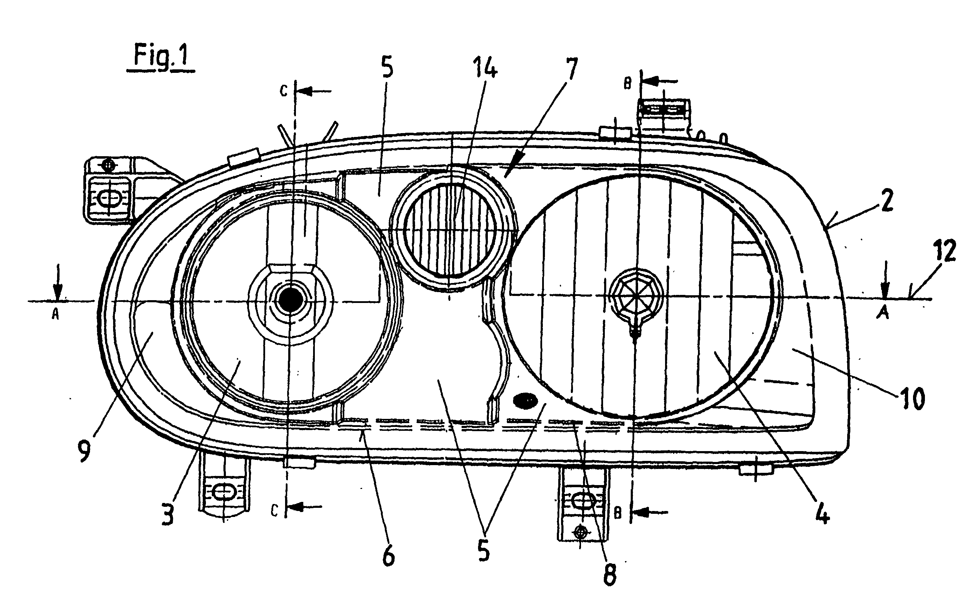

In der Zeichnung ist ein Ausführungsbeispiel nach der Erfindung dargestellt, und zwar zeigen
Figur 1 eine Vorderansicht auf eine Lichteinheit für Fahrzeuge mit zwei Scheinwerferreflektoren und einer Positionslichtlampe,

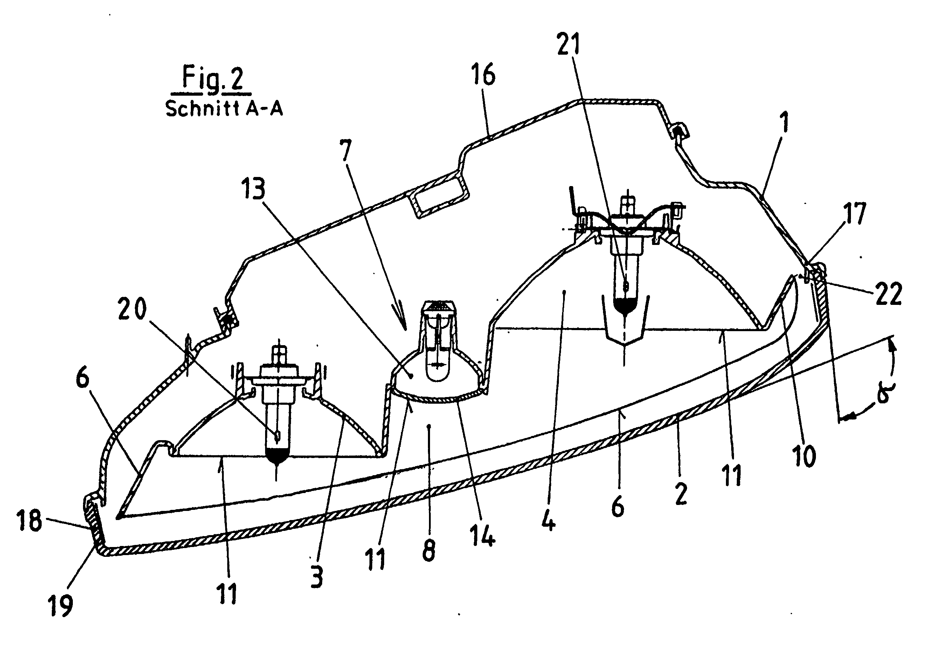

Figur 2 einen Schnitt nach der Linie A-A in Figur 1,

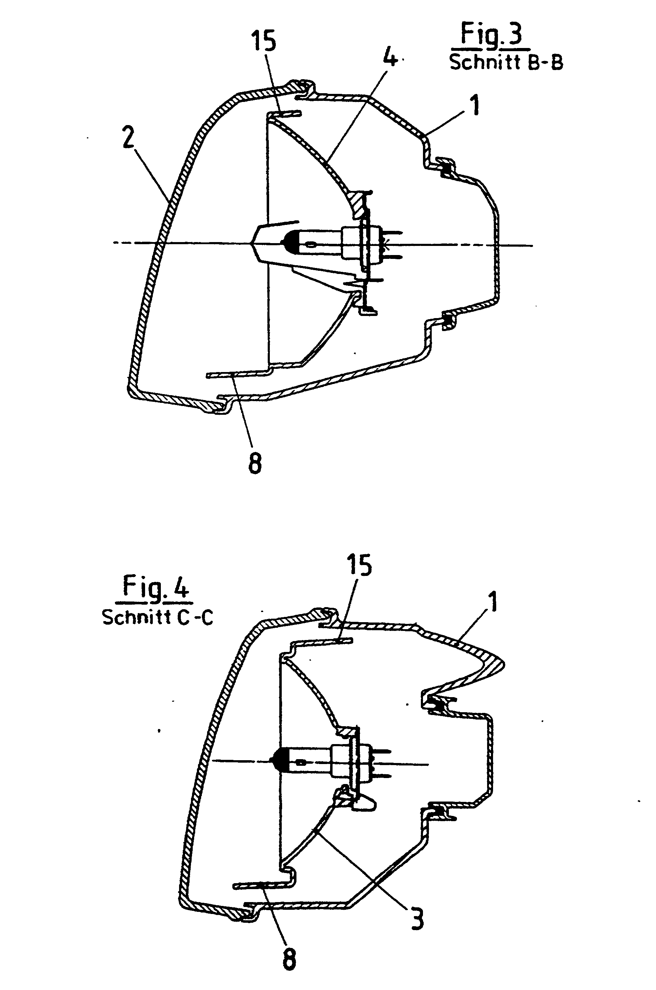

Figur 3 einen Schnitt nach der Linie B-B in Figur 1,
Figur 4 einen Schnitt nach der Linie C-C in Figur 1 und

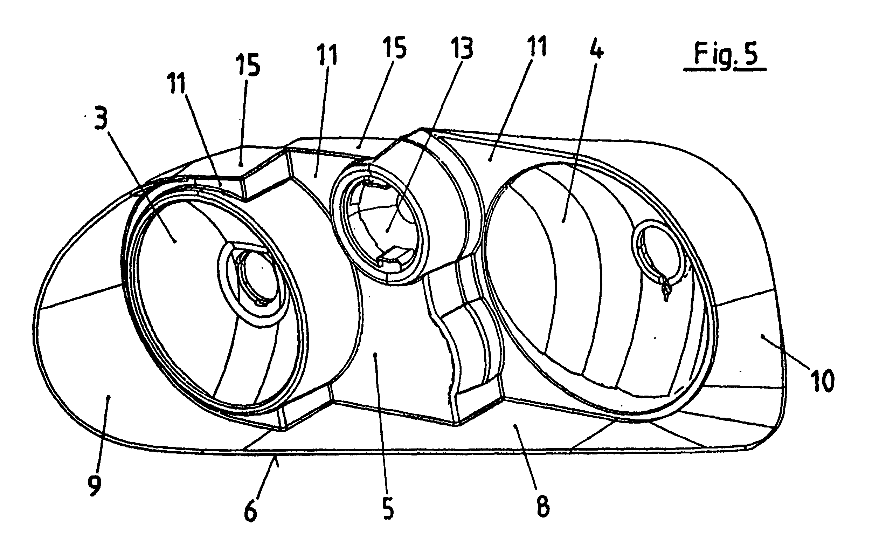

Figur 5 in einer perspektivischen Ansicht eine Einheit, welche aus den zwei Reflektoren, der Positionslichtlampe und einem ersten und zweiten Abdeckteil besteht.

Als Lichteinheit für Fahrzeuge dient ein Scheinwerfer für Kraftfahrzeuge, welcher in einer Karosserieöffnung des Fahrzeugs versenkt einbaubar ist (nicht dargestellt). Der Scheinwerfer weist ein aus Kunststoff bestehendes topfförmiges Gehäuse (1) auf. Das Gehäuse (1) ist auf seiner Rückseite mit einer Öffnung versehen, die durch eine Gehäusekappe (16) verschlossen ist. Auf das Gehäuse (1) ist eine schalenförmige Abschlußscheibe (2) aufgesetzt, welche mit ihrem umlaufenden Rand dicht mit dem vorderen Rand (17) des Gehäuses (1) verbunden ist. Die Abschlußscheibe (2) ist auf ihrer vorderen Seite frei von optischen Elementen, während die Innenseite ihrer umlaufenden Seitenwand (18) eine strukturierte Oberfläche (19) aufweist. Im Inneren des Scheinwerfers ist eine optische Einheit um eine horizontale und vertikale Achse verstellbar gelagert. Die optische Einheit besteht aus zwei seitlich nebeneinander angeordneten Reflektoren (3, 4), einer Positionslichtlampe (7) und einem ersten und zweiten Abdeckteil (5, 6). Die Reflektoren (3, 4) weisen eine kreisförmige Lichtaustrittsfläche auf und sind schalenförmig ausgeführt. In den Scheitelbereich der Reflektoren (3, 4) ist eine Öffnung zur Aufnahme einer Lampe (20 bzw. 21) eingebracht. Das erste Abdeckteil (5) weist mehrere Stufen auf, deren Trittflächen (11) vertikal und quer zur Lichtaustrittsrichtung verlaufen. Das erste Abdeckteil (5) weist drei Trittflächen (11) auf. In der mittleren Trittfläche (11) des ersten Abdeckteils (5) ist die Positionslichtlampe (7) oberhalb der horizontalen Mittelebene (12) des Scheinwerfers angeordnet. Die Positionslichtlampe (7) weist einen kreisringförmigen, schalenförmigen Reflektor (13) auf, welcher einstückig mit dem ersten Abdeckteil (5) ausgeführt ist. Der schalenförmige Reflektor (13) ist durch eine Lichtscheibe (14) mit vertikal verlaufenden optischen Elementen abgedeckt. Zumindest die die Reflektoren (3, 4) aufnehmenden äußeren Trittflächen (11) ragen in die schalenförmige Abschlußscheibe (2) hinein. Die Abschlußscheibe (2) verläuft mit ihrer Hauptausdehnung in einem spitzen Winkel α zur benachbarten Fahrzeuglängsseite (nicht dargestellt). An die Trittflächen (11) und die dazwischenliegenden Stoßflächen der Stufen des ersten Abdeckteils (3) ist umlaufend ein rahmenartiges zweites Abdeckteil (6) angeformt. Unterhalb des ersten Abdeckteils (5) und seitlich des Reflektors (3) grenzt das zweite Abdeckteil (6) mit einem L-förmigen Abschnitt an. Der L-förmige Abschnitt besteht aus einem langen Schenkel und einem kurzen Schenkel (8, 9). Das zweite Abdeckteil (6) taucht mit seinem L-förmigen Abschnitt in die schalenförmige Abschlußscheibe (2) ein. Das zweite rahmenartige Abdeckteil (6) weist seitlich des Reflektors (4) einen kurzen Schenkel (10) und oberhalb des ersten Abdeckteils (5) einen Abschnitt (15) auf. Der kurze Schenkel (10) und der Abschnitt (15) weisen zur Rückseite des Scheinwerfers. Die aus den Reflektoren (3, 4, 13) und dem ersten und zweiten Abdeckteil (5 und 6) bestehende optische Einheit ist auf ihrer gesamten Vorderseite mit einer reflektierenden Schicht versehen. Zwischen der optischen Einheit und dem vorderen Rand (17) des Gehäuses (1) besteht umlaufend ein kleiner Spalt (22). Der Spalt (22) erscheint von außen hell und somit nicht störend, da das Gehäuse aus einem eine helle Farbe aufweisenden Kunststoff hergestellt ist.

### Bezugszeichen

### Lichteinheit für Fahrzeuge

- 1: Gehäuse
- 2: Abschlußscheibe
- 3: Reflektor
- 4: Reflektor
- 5: erstes Abdeckteil
- 6: zweites Abdeckteil
- 7: Positionslichtlampe
- 8: langer Schenkel
- 9: kurzer Schenkel
- 10: kurzer Schenkel
- 11: Trittflächen
- 12: Mittelebene
- 13: Reflektor
- 14: Lichtscheibe
- 15: Abschnitt
- 16: Gehäusekappe
- 17: vorderer Rand
- 18: Seitenwand
- 19: strukturierte Oberfläche
- 20: Lampe
- 21: Lampe
- 22: Spalt

## Patentansprüche

1. Lichteinheit für Fahrzeuge, insbesondere Scheinwerfer für Kraftfahrzeuge, mit einem Gehäuse (1), mit einer die gesamte Vorderseite des Gehäuses (1) abdeckenden schalenförmigen Abschlussscheibe (2), welche zumindest optikfreie Bereiche aufweist, mit mindestens zwei in dem Gehäuse (1) angeordneten schalenförmigen Reflektoren (3, 4), welche über ein erstes Abdeckteil (5) einstückig miteinander verbunden sind, und mit einem zweiten Abdeckteil (6), welches zwischen den Reflektoren (3, 4) und der Abschlussscheibe (2) und in der Anbaulage der Lichteinheit zumindest die Reflektoren (3, 4) unterhalb und mit zwei seitlichen Schenkeln (9,10) umgibt und welches zusammen mit dem ersten Abdeckteil (5) die Sicht in das Innere der Lichteinheit abschirmt, **dadurch gekennzeichnet, dass**
a) das zweite Abdeckteil (6)
- sich ausgehend von dem ersten Abdeckteil (5) zur Abschlussscheibe (2) hin erstreckt,
- zusammen mit dem ersten Abdeckteil (5), den Reflektoren (3, 4) und einer Aufnahme des ersten Abdeckteils (5) für eine Positionslichtlampe (7) ein einstückiges Teil ist und
- im Bereich eines seitlichen Schenkels (9) zur Abschlussscheibe (2) und im Bereich des anderen seitlichen Schenkels (9) zur Rückseite des Gehäuses (1) hin weist und
b) das erste Abdeckteil (5) stufenförmig gestaltet ist, wobei die Trittflächen (11) der Stufen vertikal und quer zur Lichtaustrittsrichtung verlaufen und die Reflektoren (3, 4) und die Positionslichtlampe (7) aufnehmen.

2. Lichteinheit für Fahrzeuge nach Anspruch 1, **dadurch gekennzeichnet, dass** das zweite Abdeckteil (6) in einem Bereich oberhalb der Reflektoren (3, 4) mit einem Abschnitt (15) zur Rückseite des Gehäuses hin weist.

3. Lichteinheit für Fahrzeuge nach Anspruch 1 oder 2, **dadurch gekennzeichnet, dass** die die Reflektoren (3, 4) aufnehmenden Trittflächen (11) der Stufen des ersten Abdeckteils (5) mit mindestens einem Drittel ihrer Ausdehnung sich in das Innere einer schalenförmigen Abschlussscheibe (2) hinein erstrecken.

4. Lichteinheit für Fahrzeuge nach einem der Ansprüche 1 bis 3, **dadurch gekennzeichnet, dass** die Positionslichtlampe (7) oberhalb oder unterhalb einer horizontalen Mittelebene (12) der Lichteinheit angeordnet ist.

5. Lichteinheit für Fahrzeuge nach einem der Ansprüche 1 bis 4, **dadurch gekennzeichnet, dass** ein Reflektor (13) der Positionslichtlampe (7) einstückig mit dem ersten Abdeckteil (5) ausgeführt ist.

6. Lichteinheit für Fahrzeuge nach einem der Ansprüche 1 bis 5, **dadurch gekennzeichnet, dass** der Reflektor (13) der Positionslichtlampe (7) durch eine Lichtscheibe (14) abgedeckt ist.

7. Lichteinheit für Fahrzeuge nach einem der Ansprüche 1 bis 6, **dadurch gekennzeichnet, dass** das Gehäuse (1) aus einem eine helle Farbe aufweisenden Werkstoff besteht.

## Claims

1. Lighting unit for vehicles, particularly headlamps for motor vehicles, with a housing (1), with a shell-shaped sealing disc (2) which covers the entire front side of the housing (1), which disc exhibits at least optics-free areas, with at least two shell-shaped reflectors (3, 4) arranged in the housing (1), which reflectors are interconnected integrally by a first cover section (5), and with a second cover section (6) which surrounds at least the reflectors (3, 4) underneath and with two lateral legs (9, 10) between the reflectors (3, 4) and the sealing disc (2), and in the fitted position of the lighting unit, and which, together with the first cover section (5), screens visibility into the inside of the lighting unit, **characterised in that**
a) the second cover section (6)
- extends from the first cover section (5) to the sealing disc (2),
- together with the first cover section (5), the reflectors (3, 4) and a recess in the first cover section (5) for a side light lamp (7) is an integral part and
- points towards the sealing disc (2) in the area of one lateral leg (9) and to the rear of the housing (1) in the area of the other lateral leg (9), and
b) the first cover section (5) is designed in the shape of a step, wherein the treads (11) of the steps run vertically and transversely to the direction of light discharge, and receive the reflectors (3, 4) and side light lamp (7).

2. Lighting unit for vehicles according to Claim 1, **characterised in that** the second cover section (6) points towards the rear of the housing in an area above the reflectors (3, 4) with one section (15).

3. Lighting unit for vehicles according to Claim 1 or 2, **characterised in that** the treads (11) of the steps of the first cover section (5) receiving the reflectors (3, 4) extend with at least one third of their area into the interior of a shell-shaped sealing disc (2).

4. Lighting unit for vehicles according to one of Claims 1 to 3, **characterised in that** the side light lamp (7) is arranged above or below a horizontal central plane (12) of the lighting unit.

5. Lighting unit for vehicles according to one of Claims 1 to 4, **characterised in that** a reflector (13) of the side light lamp (7) is constructed integrally with the first cover section (5).

6. Lighting unit for vehicles according to one of Claims 1 to 5, **characterised in that** the reflector (13) of the side light lamp (7) is covered by a light disc (14).

7. Lighting unit for vehicles according to one of Claims 1 to 6, **characterised in that** the housing (1) consists of a material exhibiting a bright colour.

## Revendications

1. Unité d'éclairage pour véhicules, en particulier phares pour véhicules automobiles, comportant un boîtier (1), une plaque de fermeture (2) en forme de coque recouvrant toute la face antérieure du boîtier (1), laquelle présente au moins des régions exemptes d'optique, deux réflecteurs (3, 4) en forme de coque agencés dans le boîtier (1), qui sont reliés d'un seul tenant l'un à l'autre via une première partie de recouvrement (5), et une deuxième partie de recouvrement (6) qui, entre les réflecteurs (3, 4) et la plaque de fermeture (2) et dans la position de montage de l'unité d'éclairage, entoure au moins les réflecteurs (3, 4) en contrebas et avec deux branches latérales (9, 10) et qui, conjointement avec la première partie de recouvrement (5), occulte la vue jusqu'à l'intérieur de l'unité d'éclairage, **caractérisée en ce que**
a) la deuxième partie de recouvrement (6)
- s'étend depuis la première partie de recouvrement (5) jusqu'à la plaque de fermeture (2),
- forme une pièce d'un seul tenant avec la première partie de recouvrement (5), les réflecteurs (3, 4) et un logement pour la première partie de recouvrement (5) pour une lampe de feu de position (7), et
- est tournée vers la plaque de fermeture (2) dans la région d'une branche latérale (9) et vers la face postérieure du boîtier (1) dans la région de l'autre branche latérale (9), et **en ce que**
b) la première partie de recouvrement (5) est réalisée en gradins, les faces principales des gradins (11) s'étendant verticalement et transversalement à la direction de sortie de lumière et recevant les réflecteurs (3, 4) et la lampe de feu de position (7).

2. Unité d'éclairage pour véhicules selon la revendication 1, **caractérisée en ce que** la deuxième partie de recouvrement (6) est tournée avec un tronçon (15) vers la face postérieure du boîtier, dans une région située au-dessus des réflecteurs (3, 4).

3. Unité d'éclairage pour véhicules selon l'une ou l'autre des revendications 1 et 2, **caractérisée en ce que** les faces principales (11), qui reçoivent les réflecteurs (3, 4), des gradins de la première partie de recouvrement (5), s'étendent avec au moins un tiers de leur extension jusqu'à l'intérieur d'une plaque de fermeture (2) en forme de coque.

4. Unité d'éclairage pour véhicules selon l'une des revendications 1 à 3, **caractérisée en ce que** la lampe de feu de position (7) est agencée au-dessus ou au-dessous d'un plan médian horizontal (12) de l'unité d'éclairage.

5. Unité d'éclairage pour véhicules selon l'une des revendications 1 à 4, **caractérisée en ce qu'**un réflecteur (13) de la lampe de feu de position (7) est réalisé d'un seul tenant avec la première partie de recouvrement (5).

6. Unité d'éclairage pour véhicules selon l'une des revendications 1 à 5, **caractérisée en ce que** le réflecteur (13) de la lampe de feu de position (7) est recouvert par une plaque d'éclairement (14).

7. Unité d'éclairage pour véhicules selon l'une des revendications 1 à 6, **caractérisée en ce que** le boîtier (1) est en un matériau présentant une couleur claire.
